# EUROPEAN PATENT SPECIFICATION

(11) **EP 1 106 072 B1**
(45) Date of publication and mention of the grant of the patent: **30.11.2005**
(21) Application number: 00204336.2
(22) Date of filing: 05.12.2000
(51) Int. Cl.: A23D 9/00, C11B 7/00, C11C 1/04

(54) **Palmitoleic acid and its use in foods**
Palmitoleinsäure und ihre Verwendung in Lebensmitteln
L'acide palmitoléique et son utilisation dans des produits alimentaires

(30) Priority: 10.12.1999 EP 99309998
(43) Date of publication of application: 13.06.2001
(73) Proprietor: LODERS CROKLAAN B.V., 1521 AZ Wormerveer (NL)
(72) Inventor: Cain, Frederick William, 1521 AZ Wormerveer (NL); Bouwer, Sietze, 1521 AZ Wormerveer (NL); Menzel, Andreas, 1521 AZ Wormerveer (NL); Van den Hoek, Michel, 1521 AZ Wormerveer (NL)
(74) Representative: Stevens, Ian Edward

(56) References cited:
- WO-A-97/19601
- PATENT ABSTRACTS OF JAPAN vol. 018, no. 648 (C-1284), 8 December 1994 (1994-12-08) & JP 06 253872 A (NGK INSULATORS LTD), 13 September 1994 (1994-09-13)
- PATENT ABSTRACTS OF JAPAN vol. 013, no. 479 (C-648), 18 October 1989 (1989-10-18) & JP 01 187089 A (SHIKISHIMA BOSEKI KK), 26 July 1989 (1989-07-26)

## Description

Fats containing palmitoleic acid (=C16:1 fatty acid) are already known. In fact palmitoleic acid is a component in natural oils such as oils derived from macadamia nuts, which can contain up to 27 wt% of C16:1 fatty acid, but also oils like fish oil or seal blubber contain appreciable amounts of C16:1 fatty acid. As palmitoleic acid is considered to be a healthy oil component, that has health benefits such as antitumour activity (JP 59062523, Toyo Jozo Co Ltd), lowering serum cholesterol and LDL (Food Australia 1996, pp 216-222), and protective effect against ventricular arrhythmics as disclosed in US 5 198 250 it would be highly appreciated if the fat containing the palmitoleic acid would be liquid at temperatures of 25 °C or lower. This would ease its use in capsules for encapsulated food ingredients or food supplements. Moreover liquid forms of fat are easier to dose in food compostions than solid fats. However most of the readily available fats known to contain appreciable amounts of C16:1 are solid at room temperature or lower and thus not very suitable for above purposes.

Moreover the known fats containing appreciable amounts of C16:1 also contain appreciable amounts of other fatty acids such as c16:0 and C18:1. It would be very beneficial if we could make available fats that combine high levels of C16:1 with relatively low levels of C16:0 and C18:1. This would improve the performance, such as opacity, pourability, viscosity, dosing, and blending of these fats considerably. An attempt to achieve this is disclosed in JP -laid open 01/187 089 (Shikibo Ltd). Herein a process is given wherein an oil, in particular macademia oil is subjected to an enzymatic hydrolysis under conditions that result in complete or nearly complete hydrolysis, whereupon the fatty acids are collected in a fraction that is subjected to low temperature fractionation at about -20 to -25 oC. It is indicated that the starting material must be selected in such a way that a separation can be obtained between the C16:1 and the other fatty acids during the low temperature fractionation. This limits the choice of starting materials considerably. This accounts the more as macademia oil is a relatively rare and expensive oil. Further it would be very beneficial if the oil rich in C16:1 would also contain other healthy fatty acids, such as polyunsaturated fatty acids like EPA and DHA. We found eg that starting from a fish oil that contains more than 20 wt% C16:1, but also appreciable amounts of C16:0 and/or C18:1 it is very difficult to make an oil that contains simultaneously more than 20 wt% C16:1 and wherein the weight ratios C16:1 to C16:0 is more than 2 and the C16:1 to C18:1 weight ratio is more than 1.2 and that is essentially free of components such as cholesterolesters, normally present in fish oil under commercially acceptable process conditions. This can be attributed to the fact that the during the low T-fractionation the separation of C16:0 and C18:1 from C16:1 is very difficult so that the oils resulting will have about the same weight ratios C16:1 to C16:0 and C16:1 to C18:1 as the starting material, unless very severe separation conditions are applied.

WO 97 19601 discloses a process, wherein fish oil concentrates are made of a process wherein fish oil subjected to an enzymic conversion, the free fatty acids or esten formed are removed and the reaction product is reesterified. However this document does not reveal our typical products nor the problems of the prior art as identified by US.

From JP 06253872 products are known that contain more than 60 wt% palmitoleic acid and that are produced by culturing a yeast type in a culture medium. Nothing is disclosed about the N-values of the product, nor about C20:5 or C22:6 contents thereof.

Therefore we studied whether we could develop a process that would result in a fat relatively rich in C16:1 and relatively lean in C16:0 and/or C18:1 and that would contain polyunsaturated fatty acids and that would be liquid at ambient temperature and lower. This study resulted in the finding of novel fat compositions that meet these aims and in a novel process to make such fat compositions.

Therefore our invention concerns in the first instance a blend of glycerides and /or fatty acids comprising:
i) 20-65 wt%, preferably 25-55 wt%, most preferably 30-45 wt% C16:1 fatty acid
ii) from 2% to 15w% (DHA plus EPA)
iii) balance other fatty acids with 12 to 24 C-atoms, including C16:0 and C18:1 while the C16:1/C16:0 weight ratio in the blend is greater than 2.0, preferably greater than 4.0 and its C16:1 to C18:1 weight ratio is more than 1.2, preferably more than 2 most preferably more than 2.5
DHA being the C22:6 polyunsaturated fatty acid and EPA being the C20:5 polyunsaturated fatty acid.

It was found that these blends have very beneficial product properties if the blend displayed an N10 (solid fat content measured by NMR pulse on non stabilised fat at 10 oC) of less than 10, preferably less than 8 most preferably less than 5. Because of this N-value these fats can be used beneficially in compounds wherein a liquid form of a fat is an advantage such as in food supplements. It was found that the best product properties were obtained if the blend contained a limited amount of C16:0 and C18:1 fatty acid, in particular when the amount of C18:1 ranged from 5 - 50 wt%, preferably 8 to 30 wt% the products performed very well.

The health benefits of our new blends are improved because of the presence of a certain amount of essential fatty acids such as DHA and/or EPA, this will add the health benefits of these acids to the blend. However these acids are very soft (liquid) and thus it should have been expected that the performance of fats containing these fatty acids as well would be less than for the oils without these essential fatty acids. However we found that blends containing more than 2 wt% and even more than 4 wt% of these highly unsaturated essential fatty acids still performed well, even the oxigen sensitivity of such blends was acceptable for practical purposes. It was found that the presence of amounts of more than 15 wt% of these polyunsaturated fatty acids leads to products that could not be handled anymore because of the fact that they developed an off taste already after only a few days. Blends that can contain our high levels of C16:1 in combination with the required levels of DHA and/or EPA can be derived from fish oils. To obtain such blends an oil containing a certain minimum amount of C16:1 such as fish oil has to be processed in a specific way. This specific process concerns a process involving the following steps:
i) Hydrolysing an oil derived from fish oil that is relatively rich in C16:1 using an enzyme that is selective for C16:1 under conditions resulting in a hydrolysis level that is maximum 80 %, preferably maximum 60 %, most preferably maximum 40 %
ii) Removal of the fatty acids from the hydrolysis reaction product
iii) Fractionation of the acids using solvent or dry fractionation techniques
iv) optionally esterification of the fatty acids via an enzyme treatment to give a glyceride mixture

Because of the fact that we use an enzyme with specifity for C16:1 fatty acids and we perform an incomplete hydrolysis we achieve an enrichement in C16:1 over the other fatty acids present in the starting material, including the C16:0 and C18:1 fatty acids.
In this way we can avoid the application of a low T-fractionation which would lead to a process that would have little commercial applicability.

Suitable conditions for the enzymic hydrolysis are:
Weight ratio enzyme to oil 0.001 to 0.2, preferably 0.002 to 0.05.
Amount of water 10 - 50 % on oil,preferably 30 to 50 % Temperatures 20 to 50 °C,preferably 25 to 35 oC
Residence times of 0.5 to 48 hours,preferably 8 to 24 hrs.

In above process the enzymes can be selected from the group consisting of *Candida sp., Geotrichum sp., Rhizomucor sp.,* or *Pseudomonas sp.*

The liberated fatty acids can be separated from the rest of the reaction mixture by molecular destillation, solvent or dry fractionation.

During the fractionation the following conditions can be used:
1. for dry fractionation: Cooling down of the fatty acids to a temperature where 20 - 40 % of the fatty acids crystallize (depending on N value of the composition between 10 and 35 °C) and subsequent filtration at 5 to 50 bar. This procedure has to be repeated once or twice.
2. for wet fractionation: A warm (40 - 50 °C) mixture of fatty acids and 50 - 400 vol% solvent is cooled down very slowly to -10 to 20 °C. Crystals are removed by filtration. The filtrate is concentrated.
   Solvents that can be applied are: acetone, hexane, petroleum ethers, and ethanol.

Our blends with relatively high C16:1 contents can also be used for food applications. Herefore it is beneficial to blend our blends with other so called complementary fats. Therefore part of our invention is also a blend of glycerides and/or free fatty acids comprising:
0.3 - 95 wt% of the blends according to our first invention, defined above or made by the process according to our invention and 99.7 - 5 wt% of a complementary fat, having a solid fat index at 10 °C that is at least 5 % more, than the N₁₀ of the blend according to our first invention.

These blends comprise in particular 2 - 80 wt%, more particular 5 - 40 wt% of the blend according to our invention, and 98 - 20 wt%, in particular 95 - 60 wt% of the complementary fat.
The complemenatry fats that perform best have a solid fat content (NMR pulse; not stabilised) of more than 15 at 20 oC, preferably more than 20.

Examples of suitable complementary fats are: cocoa butter equivalents, cocoa butter, palm oil or fractions thereof, palm kernel oil or fractions thereof, interesterified mixtures of above fats or fractions or hardened components thereof, or from liquid oil, such as sunflower oil, high oleic sunflower oil, soybean oil, rape seed oil, cottonseed oil, safflower oil, high oleic safflower oil, maize oil or MCT oils, hardened liquid oils or fractions thereof or mixtures of one or more of the fats or oils mentioned. These blends display solid fat contents (NMR-pulse; not stabilised) of 0 - 85%, preferably 10 - 70%, most preferably 20 - 60% at 5 oC and < 30, preferably < 20, most preferably < 5 at 35 oC.

In order to stabilise the fat composition further we prefer that our blends contain between 0.01 and 5% preferably 0.1 and 3% of an oxidation stabiliser, selected from the group consisting of: natural or synthetic tocopherols, BHT, BHA, free radical scavengers, enzymes with anti-oxidant properties.

According to another embodiment of our invention our invention also comprises food products, comprising a fat phase, such as spreads, margarine, cream alternative, infant food, chocolate, confectionery, bakery products, sauces, ice-creams, ice-cream coatings, cheese, soups, mayonnaise, dressings, wherein the fat phase contains a blend according to the invention.

Also capsules comprising a filling, encapsulated in an edible coating, wherein the filling consists of the blend according to our invention are part of our invention.

### EXAMPLES

### 1. PREPARATIONS OF C16:1 RICH OIL

A)
   10 kg of Menhaden fish oil with the composition mentioned in table 1 were subjected to an enzymatic hydrolysis using *Candida rugosa* lipase (0.02 % on fish oil) in 5 kg of water. The hydrolysis was performed under nitrogen at 30 oC for 20 hours. This resulted in a hydrolysis that was 45.5 % of the total conversion rate.
   The crude product obtained was heated to 80 °C and washed twice with 3 1 water and the free fatty acids were purified by distillation.
   The product obtained had the composition as given in table 2 (a). This product was fractionated using acetone (weight ratio fatty acids to acetone = 1 to 2, fractionation temperature 0 oC). The solvent fraction was collected and had the composition mentioned in table 2 (b). The yield was 20 % on starting oil (N10 = 7.6).
B)
   10 kg of Menhaden fish oil with the composition mentioned in table 1 were subjected to an enzymatic hydrolysis using *Candida rugosa* lipase (0.003 % on fish oil) in 5 kg of water. The hydrolysis was performed under nitrogen at 30 oC for 23 hours. This resulted in a hydrolysis that was 22 % of the total conversion rate.
   Further workup and fractionation was as above. The composition of these acids is given in table 2 [(c) after hydrolysis, (d) after fractionation]. The yield was 10 % on starting oil (N10 = 6.2).
C)
   Repeating the procedure of example 1B but using macademia oil as starting material and applying a conversion rate of about 30% (0.003% of lipase; T=30°C; time = 26 hrs) resulted in a product with 30% FFA's, containing 6.4% C16:0; 34.1% C16:1 and 53.6% C18:1. Fractionation of this product under the condition of ex 1B resulted in a product with a C16:1 to C18:1 ratio of more than 1.2 that could not be applied properly.

### 2. REESTERIFICATIONS OF C16:1 RICH OIL

A)
   629 g of fatty acids of example 1.A [composition see table 2 (b)] and 75.3 g glycerol were subjected to an enzymatic esterification using immobilized *Rhizomucor miehei* lipase (2 % on fatty acids, Amano SP392). The esterification was performed under a nitrogen stream (to remove the water) at 60 °C for 4 d. This resulted in a esterification with 0.8 % fatty acids left. The enzyme was filtrated off. The yield was 89 % on starting fatty acids (N10 = 3.1). The composition is given in table 3 (a).
B)
   741 g of fatty acids of example 1.B [composition see table 2 (d)] and 88.8 g glycerol were subjected to an enzymatic esterification using immobilized *Rhizomucor miehei* lipase (5 % on fatty acids, Amano SP392). The esterification was performed under a nitrogen stream (to remove the water) at 60 °C for 2 d. This resulted in a esterification with 0.5 % fatty acids left. The enzyme was filtrated off. The yield was 94 % on starting fatty acids (N10 = 1.6). The composition is given in table 3 (b).

**Table 1**

| Fatty Acids | Crude Menhaden Oil |
|---|---|
| | |
| 16:4ω3 | 0.9 |
| 18:3ω3 | 1.1 |
| 18:4ω3 | 2.5 |
| 20:3ω3 | 0.0 |
| 20:4ω3 | 1.3 |
| 20:5ω3 | 12.1 |
| 21:5ω3 | 0.7 |
| 22:4ω3 | 0.1 |
| 22:5ω3 | 2.3 |
| 22:6ω3 | 7.7 |
| C12:0 | 0.1 |
| C15:0 | 0.7 |
| C14:0 | 8.9 |
| C14:1 | 0.1 |
| C16:0 | 19.8 |
| C16:1 | 12.5 |
| C17:0 | 0.5 |
| C18:0 | 3.2 |
| C18:1 | 9.2 |
| C18:2 | 1.1 |
| C18:3 | 0.2 |
| C20:0 | 0.2 |
| C20:3 | 0.3 |
| C20:4 | 1.4 |
| C20:1 | 1.0 |
| C20:2 | 0.2 |
| C22:0 | 0.2 |
| C22:1 | 0.2 |
| C24:0 | 0.1 |
| C24:1 | 0.2 |
| Others | 11.2 |

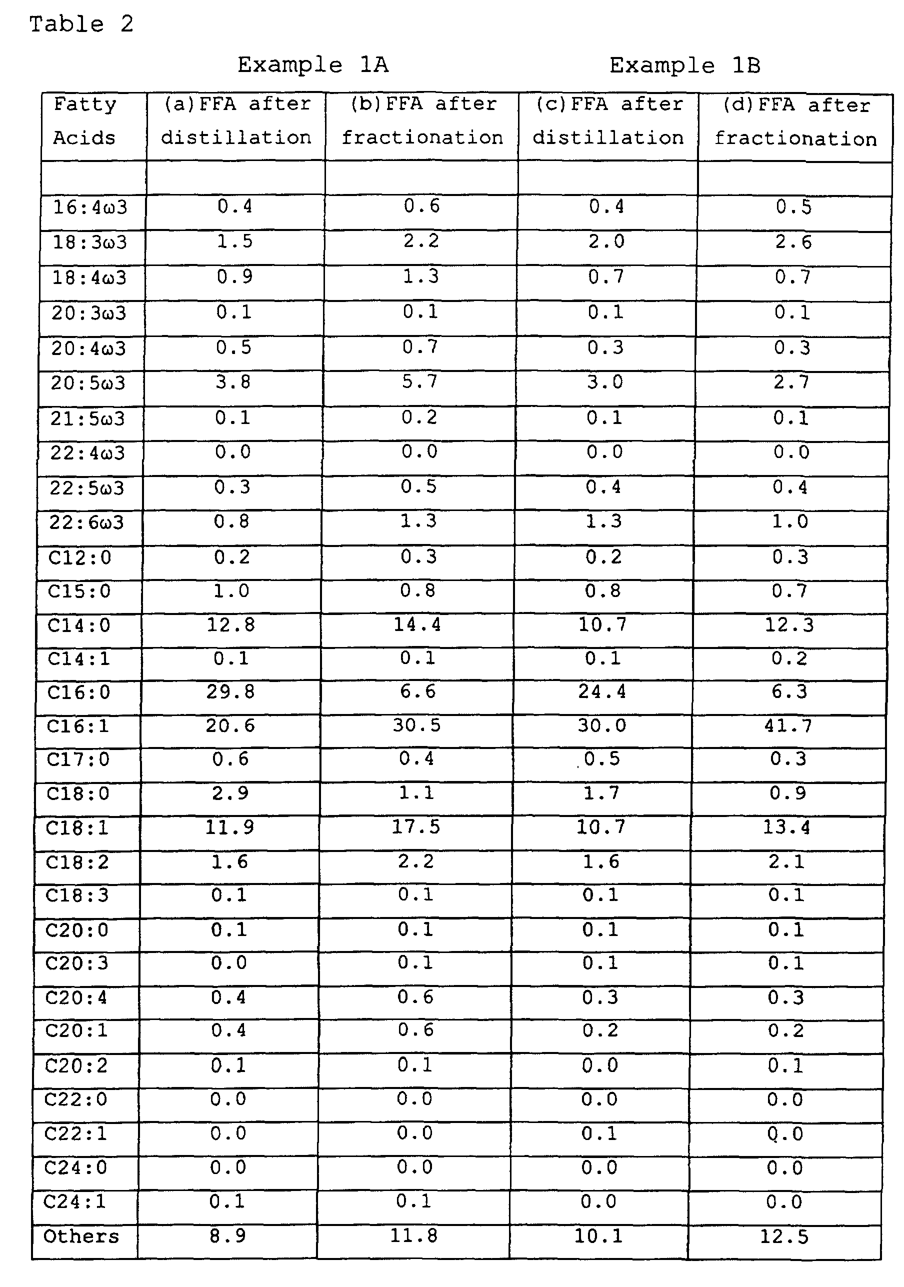

**Table 3**

| Fatty Acids | (a) Glycerides of Example 2A | (b) Glycerides of Example 2B |
|---|---|---|
| | | |
| 16:4ω3 | 0.7 | 0.4 |
| 18:3ω3 | 2.2 | 2.6 |
| 18:4ω3 | 1.3 | 0.7 |
| 20:3ω3 | 0.1 | 0.1 |
| 20:4ω3 | 0.7 | 0.3 |
| 20:5ω3 | 6.0 | 2.7 |
| 21:5ω3 | 0.2 | 0.1 |
| 22:4ω3 | 0.0 | 0.0 |
| 22:5ω3 | 0.6 | 0.3 |
| 22:6ω3 | 1.3 | 1.0 |
| C12:0 | 0.3 | 0.3 |
| C15:0 | 0.8 | 0.7 |
| C14:0 | 14.0 | 12.2 |
| C14:1 | 0.2 | 0.2 |
| C16:0 | 6.5 | 6.3 |
| C16:1 | 30.0 | 41.9 |
| C17:0 | 0.3 | 0.3 |
| C18:0 | 1.1 | 0.9 |
| C18:1 | 17.5 | 13.5 |
| C18:2 | 2.2 | 2.1 |
| C18:3 | 0.1 | 0.1 |
| C20:0 | 0.1 | 0.0 |
| C20:3 | 0.1 | 0.1 |
| C20:4 | 0.5 | 0.3 |
| C20:1 | 0.6 | 0.2 |
| C20:2 | 0.1 | 0.1 |
| C22:0 | 0.0 | 0.0 |
| C22:1 | 0.0 | 0.0 |
| C24:0 | 0.0 | 0.0 |
| C24:1 | 0.1 | 0.0 |
| Others | 12.4 | 12.6 |

## Claims

1. A blend of glycerides and/or fatty acids comprising:
i) 20 - 65 wt%, preferably 25 - 55 wt%, most preferably 30 - 45 wt% of C16:1 fatty acid
ii) from 2 to 15 wt% (DHA plus EPA)
iii) balance other fatty acids with 12 to 24 C-atoms, including C16:0 and C18:1
iv) while the C16:1/C16:0 weight ratio in the blend is greater than 2.0, preferably greater than 4.0.
v) and its weight ratio C16:1 to C18:1 is more than 1.2, preferably more than 2, most preferably more than 2.5.

2. Blend according to claim 1 wherein the blend displays an N10 (solid fat content measured by NMR pulse on non stabilised fat at 10 °C) of less than 10, preferably less than 8 most preferably less than 5.

3. Blend according to claim 1 or 2 wherein the blend has an C18:1 content of 5 to 50 wt%, preferably 8 to 30 %.

4. Blend according to claims 1 to 3 which blend is derived from a fish oil.

5. Blends of glycerides and/or free fatty acids comprising:
0.3 - 95 wt% of the blends according to claims 1 to 4 and 99.7 - 5 wt% of a complementary fat, having a solid fat index at 10 C that is at least 5 % more, than the N₁₀ of the blend according to claims 1 to 4.

6. Blends of glycerides and/or free fatty acids, according to claim 5, comprising 2 - 80 wt%, in particular 5 - 40 wt% of the blend according to claims 1-5, and 98 - 20 wt%, in particular 95 - 60 wt% of a complementary fat.

7. Blends according to claims 5-6, wherein the complementary fat has a solid fat content (NMR-pulse; not stabilised) of more than 15 at 20 C, preferably more than 20.

8. Blends according to claims 5-7, wherein the complementary fat is selected from at least one fat of the group consisting of: cocoa butter equivalents, cocoa butter, palm oil or fractions thereof, palm kernel oil or fractions thereof, interesterified mixtures of above fats or fractions or hardened components thereof, or from liquid oil, such as sunflower oil, high oleic sunflower oil, soybean oil, rape seed oil, cottonseed oil, safflower oil, high oleic safflower oil, maize oil or MCT oils, hardened liquid oils or fractions thereof or mixtures of one or more of the fats or oils mentioned.

9. Blends according to claims 5-8, wherein the blend displays a solid fat content (NMR-pulse; not stabilised) of 0 - 85, preferably 10 - 70, most preferably 20 - 60 at 5 oC and < 30, preferably < 20, most preferably < 5 at 35 oC.

10. Blends, according to claims 1-4 or 5-9, wherein the blends contain between 0.01 and 5% preferably 0.1 and 3% of an oxidation stabiliser, selected from the group consisting of: natural or synthetic tocopherols, BHT, BHA, free radical scavengers, enzymes with anti-oxidant properties.

11. Food products, comprising a fat phase, such as spreads, margarine, cream alternative, infant food, chocolate, confectionery, bakery products, sauces, ice-creams, ice-cream coatings, cheese, soups, mayonnaise, dressings, wherein the fat phase contains a blend according to claims 1-4 or according to claims 5-10.

12. Capsules comprising a filling, encapsulated in an edible coating, wherein the filling consists of the blend according to claims 1-4 or claims 5-10.

## Patentansprüche

1. Mischung von Glyzeriden und/oder Fettsäuren mit:
i) 20 bis 65 Gewichts-%, vorzugsweise 25 bis 55 Gewichts-%, am meisten bevorzugt 30 bis 45 Gewichts-% C16:1-Fettsäure
ii) von 2 bis 15 Gewichts-% (Docosahexansäure plus Eicosapentaensäure)
iii) als Rest andere Fettsäuren mit 12 bis 24 C-Atomen, einschließlich C16:0 und C18:1.
iv) während das C16:1/C16:0-Gewichtsverhältnis in der Mischung größer als 2,0, vorzugsweise größer als 4,0 ist;
v) und ihr Gewichtsverhältnis C16:1 zu C18:1 mehr als 1,2 beträgt, vorzugsweise mehr als 2, am meisten bevorzugt mehr als 2,5.

2. Mischung nach Anspruch 1, wobei die Mischung einen N10-Werte (Festfettgehalt gemessen durch NMR-Pulse an nicht-stabilisiertem Fett bei 10 °C) von weniger als 10, vorzugsweise weniger als 8 und am meisten bevorzugt weniger als 5 zeigt.

3. Mischung nach Anspruch 1 oder 2, wobei die Mischung einen C18:Gehalt von 5 bis 50 Gewichts-%, vorzugsweise 8 bis 30 Gewichts-% aufweist.

4. Mischung nach Anspruch 1 bis 3, wobei die Mischung von einem Fischöl erhalten ist.

5. Mischungen von Glyzeriden und/oder freien Fettsäuren mit:
0,3 bis 95 Gewichts-% der Mischungen nach den Ansprüchen 1 bis 4 und 99,7 bis 5 Gewichts-% eines komplementären Fetts mit einem Festfettindex bei 10 °C, der mindestens 5 % größer als der N10-Wert der Mischung nach den Ansprüchen 1 bis 4 ist.

6. Mischungen von Glyzeriden und/oder freien Fettsäuren nach Anspruch 5, die 2 bis 80 Gewichts-%, insbesondere 5 bis 40 Gewichts-%, der Mischung nach den Ansprüchen 1 bis 5 und 98 bis 20 Gewichts-%, insbesondere 95 bis 60 Gewichts-%, eines komplementären Fetts aufweisen.

7. Mischungen nach Anspruch 5 bis 6, wobei das komplementäre Fett einen Festfettgehalt (NMR-Pulse, nicht stabilisiert) von mehr als 15 bei 20°C, vorzugsweise von mehr als 20 aufweist.

8. Mischungen nach den Ansprüchen 5 bis 7, wobei das komplementäre Fett ausgewählt ist aus mindestens einem Fett aus der Gruppe, die besteht aus: Kakaobutteräquivalenten, Kakaobutter, Palmöl oder Fraktionen davon, Palmkernöl oder Fraktionen davon, veresterten Mischungen der obigen Fette oder Fraktionen oder gehärteten Komponenten davon oder von flüssigem Öl, wie beispielsweise Sonnenblumenöl, hochölsäurehaltigem Sonnenblumenöl, Sojaöl, Rapsöl, Bauwollsaatöl, Safloröl, hochölsäurehaltigem Safloröl, Maisöl oder MCT-Ölen, gehärtetem flüssigen Öl oder Fraktionen davon oder Mischungen eines oder mehrerer der erwähnten Fette oder öle.

9. Mischungen nach den Ansprüchen 5 bis 8, wobei die Mischung einen Festfettgehalt (NMR-Pulse, nicht stabilisiert) von 0 bis 85, vorzugsweise 10 bis 70, am meisten bevorzugt 20 bis 60 bei 5 °C und kleiner als 30, vorzugsweise kleiner als 20, am meisten bevorzugt kleiner als 5 bei 35 °C aufweist.

10. Mischungen nach den Ansprüchen 1 bis 4 oder 5 bis 9, wobei die Mischungen zwischen 0,01 und 5 %, vorzugsweise zwischen 0,1 und 3 % eines Oxidationsstabilisators enthalten, der aus der Gruppe ausgewählt ist, die aus natürlichen oder synthetischen Tocopherolen, BHT, BHA, Schutzmitteln vor freien Radikalen und Enzymen mit Antioxidationseigenschaften ausgewählt ist.

11. Nahrungsmittelprodukt, das eine Fettphase enthält, wie beispielsweise Aufstriche, Margarine, Sahnealternativen, Kindernahrung, Schokolade, Konfekt, Backwaren, Saucen, Eiscreme, Eiscremebeschichtungen, Käse, Suppen, Majonäse, Salatsaucen, wobei die Fettphase eine Mischung gemäß den Ansprüchen 1 bis 4 oder gemäß den Ansprüchen 5 bis 10 enthält.

12. Kapseln mit einer Füllung, die in einer essbaren Umhüllung eingekapselt ist, wobei die Füllung aus einer Mischung nach einem der Ansprüche 1 bis 4 oder der Ansprüche 5 bis 10 besteht.

## Revendications

1. Mélange de glycérides et/ou d'acides gras, comprenant :
i) 20 à 65 % en poids, de préférence 25 à 55 % en poids, de toute préférence 30 à 45 % en poids d'acide gras C16:1
ii) de 2 à 15 % en poids (DHA plus EPA)
iii) le reste, d'autres acides gras ayant 12 à 24 atomes de C, incluant C16:0 et C18:1
iv) le rapport pondéral C16:1/C16:0 dans le mélange étant supérieur à 2,0, de préférence supérieur à 4,0.
v) et son rapport pondéral C16:1 à C18:1 est supérieur à 1,2, de préférence supérieur à 2, de toute préférence supérieur à 2,5.

2. Mélange selon la revendication 1, dans lequel le mélange présente un N10 (teneur en matière grasse solide mesurée par impulsion RMN sur une matière grasse non stabilisée à 10 °C) inférieur à 10, de préférence inférieur à 8, de toute préférence inférieur à 5.

3. Mélange selon la revendication 1 ou 2, dans lequel le mélange a une teneur en C18:1 de 5 à 50 % en poids, de préférence 8 à 30 %.

4. Mélange selon les revendications 1 à 3, lequel mélange est dérivé d'une huile de poisson.

5. Mélanges de glycérides et/ou d'acides gras libres, comprenant :
0,3 à 95 % en poids des mélanges selon les revendications 1 à 4 et 99,7 à 5 % en poids d'une matière grasse complémentaire, ayant un indice de matière grasse solide à 10 °C qui est au moins 5 % supérieur au N₁₀ du mélange selon les revendications 1 à 4.

6. Mélanges de glycérides et/ou d'acides gras libres selon la revendication 5, comprenant 2 à 80 % en poids, en particulier 5 à 40 % en poids du mélange selon les revendications 1 à 5 et 98 à 20 % en poids, en particulier 95 à 60 % en poids d'une matière grasse complémentaire.

7. Mélange selon les revendications 5-6, dans lesquels la matière grasse complémentaire a une teneur en matière grasse solide (impulsion RMN ; non stabilisée) supérieure à 15, à 20 °C, de préférence encore supérieure à 20.

8. Mélanges selon les revendications 5 à 7, dans lesquels la matière grasse complémentaire est choisie parmi au moins une matière grasse du groupe constitué par : les équivalents du beurre de cacao, le beurre de cacao, l'huile de palme ou des fractions de celle-ci, l'huile de noyaux de palme ou des fractions de celle-ci, des mélanges interestérifiés des matières grasses ou fractions ci-dessus ou de constituants durcis de celles-ci, ou parmi une huile liquide telle que l'huile de tournesol, l'huile de tournesol riche en constituant oléique, l'huile de soja, l'huile de colza, l'huile de graines de coton, l'huile de carthame, l'huile de carthame riche en constituant oléique, l'huile de maïs ou les huiles MCT, les huiles liquides durcies ou des fractions de celles-ci ou des mélanges d'une ou plusieurs des matières grasses ou huiles mentionnées.

9. Mélanges selon les revendications 5 à 8, dans lesquels le mélange présente une teneur en matière grasse solide (impulsion RMN ; non stabilisée) de 0 à 85, de préférence 10 à 70, de toute préférence 20 à 60, à 5 C, et < 30, de préférence < 20, de toute préférence < 5, à 35 °C.

10. Mélanges selon les revendications 1 à 4 ou 5 à 9, les mélanges contenant entre 0,01 et 5 %, de préférence 0,1 et 3 % d'un stabilisant d'oxydation, choisi dans le groupe constitué par : les tocophérols naturels ou synthétiques, BHT, BHA, les épurateurs de radicaux libres, les enzymes ayant des propriétés antioxydantes.

11. Produits alimentaires comprenant une phase grasse, tels que les produits à tartiner, la margarine, les variantes de crème, les aliments infantiles, le chocolat, les confiseries, les produits de boulangerie, les sauces, les crèmes glacées, les nappages pour crème glacée, le fromage, les potages, la mayonnaise, les vinaigrettes, où la phase grasse contient un mélange selon les revendications 1 à 4 ou selon les revendications 5 à 10.

12. Capsules comprenant un garnissage, encapsulé dans un revêtement comestible, dans lesquelles le garnissage consiste en le mélange selon les revendications 1 à 4 ou les revendications 5 à 10.
